# EUROPÄISCHE PATENTSCHRIFT

(11) **EP 0 337 118 B1**
(45) Veröffentlichungstag und Bekanntmachung des Hinweises auf die Patenterteilung: **13.10.1993**
(21) Anmeldenummer: 89104245.9
(22) Anmeldetag: 10.03.1989
(51) Int. Cl.: F16B 37/04

(54) **Schiebemutter oder -schraube zum Einsetzen in C-Schienen**
Sliding nut or bolt to be inserted in C formed rails
Ecrou ou boulon coulant à poser dans des profilés en C

(30) Priorität: 11.04.1988 DE 3811974
(43) Veröffentlichungstag der Anmeldung: 18.10.1989
(73) Patentinhaber: Müller, Franz, D-65205 Wiesbaden (DE)
(72) Erfinder: Müller, Franz, D-65205 Wiesbaden (DE)
(74) Vertreter: Jochem, Bernd, Dipl.-Wirtsch.-Ing.

(56) Entgegenhaltungen:
- BE-A- 533 640
- GB-A- 1 503 588
- US-A- 2 944 642
- US-A- 3 813 179

## Beschreibung

Die Erfindung betrifft eine Schiebemutter oder -schraube zum Einsetzen in C-Schienen mit einwärts weisenden Randstegen, die in Längsnuten der Mutter bzw. des Schraubenkopfs eingreifen, welche mit Verformungen der Randstege auslosenden Vorsprüngen versehen sind.

Die bekannten derartigen Schiebemuttern oder -schrauben, z. B. gemäß US-A-2 944 642, DE-PS 35 29 345 oder DE-GM 85 33 059, haben scharfkantige, schneidenförmige Vorsprünge, die vom Grund der Längsnuten axial vorstehen und sich bei der Schraubverspannung in die freien Enden der einwärts weisenden Randstege eingraben, wodurch die Spannstellung der Schiebemutter bzw. -schraube gegen Verschieben längs der Schiene gesichert wird. In ähnlicher Weise ist eine andere bekannte Schiebemutter gemäß DE-GM 19 22 581, die für C-Schienen ohne nach einwärts weisende Randstege bestimmt ist, mit kleinen, spitzen oder schneidenförmigen Erhebungen ausgebildet, die sich bei der Schraubverspannung neben dem Längsschlitz der C-Schiene in deren Material eindrücken. Schließlich ist es durch die US-A-3 813 179 auch schon bekannt, den Längsnuten eines Schraubenkopfs einen zickzackförmigen Verlauf zu geben, so daß sie mit scharfkantigen Zacken seitlich in die Randstege einschneiden. Dieselbe Wirkung wird gemäß BE-A-533 640 durch versetzt angeordnete spitze Zähne an den Seitenwänden gerader Längsnuten einer Schiebemutter erreicht. Allen derartigen Schiebemuttern und -schrauben ist der Nachteil gemeinsam, daß sie insgesamt oder wenigstens Einsätze im Bereich der Schneidkanten oder -spitzen härter sein müssen als das Material der C-Schienen. Außerdem bedarf es starker Kräfte, um die Schneidkanten darin eindringen zu lassen. Schließlich wird die Schiene durch die Schneidkanten oder Spitzen beschädigt, was sich vor allem bei Schienen mit einer besonderen Oberfläche, z. B. eloxierten Schienen, bemerkbar macht.

Der Erfindung liegt daher die Aufgabe zugrunde, eine Schiebemutter oder -schraube der eingangs genannten Art zu schaffen, die kostengünstig aus einem Material hergestellt werden kann, welches weniger hart als bei bekannten Ausführungen, ggf. sogar weicher als das Material der C-Schienen sein kann, die sich leichter festziehen läßt und die ggf.geringere Schäden an der C-Schiene hervorruft.

Vorstehende Aufgabe wird erfindungsgemäß dadurch gelöst, daß wenigstens ein Vorsprung durch seitliche Krümmung der Seitenwand einer Längsnut gebildet ist, so daß er einen Randsteg seitlich bogenförmig verbiegt.

Die Erfindung nutzt die überraschende Erkenntnis, daß es leichter ist, die frei endenden Randstege quer zu ihrer Längsrichtung seitlich zu verbiegen, als Spitzen oder Schneidkanten mit einer seitlich oder in Richtung zur Spitze hin wirkenden Kraft in das Material der C-Schienen einzugraben. Die seitliche Verbiegung der Randstege kann im Bedarfsfall sehr einfach wieder rückgängig gemacht werden.

Je nach Belastungsrichtung können erfindungsgemäße Schiebemuttern oder -schrauben durch die seitliche Verbiegung der Randstege einer C-Schiene auch eine Verbesserung von deren Steifigkeit bewirken.

Anhand der Zeichnung werden nachstehend Ausführungsbeispiele der Erfindung näher erläutert. Es zeigen:
- Fig. 1: einen Querschnitt durch eine C-Schiene mit einer darin eingesetzten Schiebemutter;
- Fig. 2: eine Ansicht von unten auf die C-Schiene mit Schiebemutter nach Fig. 1;
- Fig. 3: eine Stirnansicht der Schiebemutter gemäß Fig. 1 und 2;

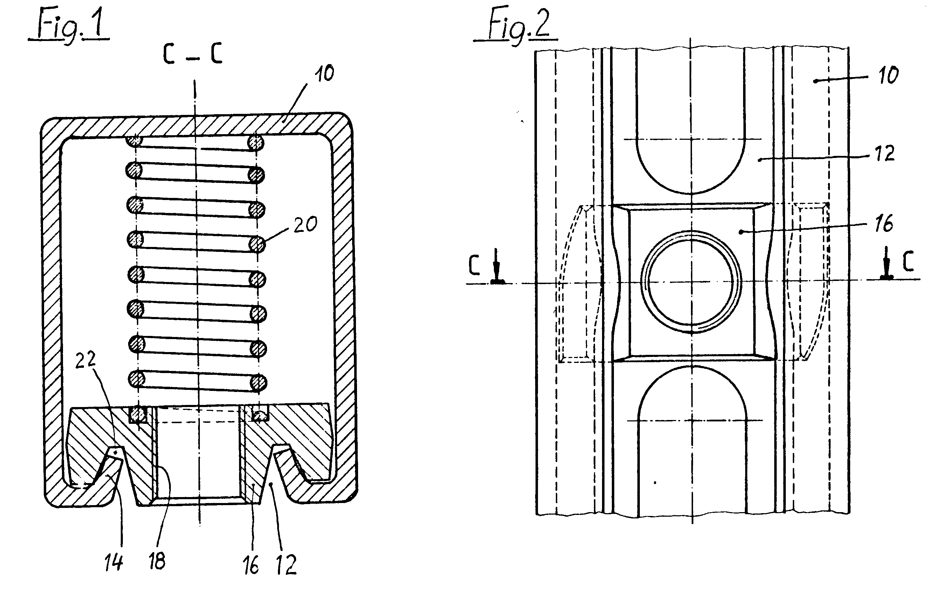

In Fig. 1 und 2 ist eine marktübliche C-Schiene 10 dargestellt, deren sich in Längsrichtung erstreckende einseitige Öffnung mit 12 bezeichnet ist. Die die Öffnung 12 begrenzenden Randstege 14 sind recht- oder stumpfwinklig abgekantet, so daß sie nach einwärts in den Innenraum der C-Schiene weisen.

Auf den Randstegen 14 sitzt in herkömmlicher Weise eine Schiebemutter 16. Sie hat eine durchgehende Gewindebohrung 18 und kann entweder durch einen darin einzuschraubenden Gewindebolzen, der gegen die gegenüberliegende Wand der C-Schiene drückt, oder durch eine Scheibe oder ein anderes Teil, welches beim Einschrauben eines Gewindebolzens in die Gewindebohrung 18 gegen den achsnormalen Bereich der Randstege 14 festgezogen wird, mit der C-Schiene verspannt werden. Um ein ungewolltes Verschieben der Schiebemutter 16 bei der Montage zu verhindern, ist zwischen dieser und der gegenüberliegenden Wand der C-Schiene 10 eine Schraubenfeder 20 eingespannt. Diese ist mit ihrem einen Ende an der Schiebemutter 16 fest gelagert und mit dem anderen Ende längs der gegenüberliegenden Wand der C-Schiene 10 verschieblich.

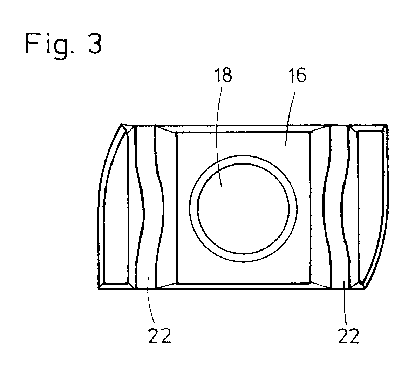

Zum Eingriff in die einwärts abgewinkelten Randstege 14 der C-Schiene 10 ist die Schiebemutter 16 gemäß Fig. 3 auf ihrer gemäß Fig. 1 unteren Seite mit zwei Längsnuten 22 ausgebildet. Normalerweise sind diese Längsnuten bei anderen Schiebemuttern geradlinig wie die freien Enden der Randstege 14. Die Besonderheit der gezeigten Schiebemutter 16 besteht darin, daß die Längsnuten 22 ungeachtet ihrer schrägen Seitenwände in Längsrichtung gekrümmt sind. Die Krümmung ist im Beispielsfall nach Fig. 3 bei beiden Längsnuten 22 spiegelsymmetrisch ausgeführt, und zwar in der Weise, daß sich in Längsrichtung der C-Schiene 10 und der Längsnuten 22 deren innere Kanten (die Kanten zwischen dem Grund und den Seitenwänden der Längsnuten) in der Mitte der Schiebemutter der Mittellängsachse am nächsten kommen und sich in Längsrichtung nach beiden Seiten von dieser entfernen. Die Richtungsänderungen der Längsnuten 22 haben die Form von weichen Rundungen mit verhältnismäßig großem Radius.

Der gekrümmte Verlauf der Längsnuten 22 führt bei der Schraubverspannung zwischen der Schiebemutter 16 und der C-Schiene 10 dazu, daß auch die einwärts weisenden freien Enden der Randstege 14 seitlich, d. h. zur Mittellängsachse der C-Schiene 10 hin bzw. von dieser fort, entsprechend dem Verlauf der Längsnuten 22, gekrümmt werden. Durch dieses großflächige Verbiegen der Randstege 14, welches sich über die gesamte Länge der Längsnuten 22 erstrecken kann, wird die Schiebemutter unverrückbar an der C-Schiene 10 festgelegt.

Wie am besten aus Fig. 3 ersichtlich, können die Längsnuten 22 der Schiebemutter 16 so geformt sein, daß sich ihre äußeren Kanten - mit Bezug auf Fig. 1 die unteren Kanten der Längsnuten 22 - geradlinig parallel zur Mittellängsachse der C-Schiene 10 und der Schiebemutter 16 erstrecken. Nur die inneren Kanten am Übergang zwischen den Seitenwänden der Längsnuten 22 und deren Grund haben einen gekrümmten Verlauf. Dementsprechend ändert sich die Neigung der Seitenwände der Längsnuten 22 über deren Länge. Alternativ besteht auch die Möglichkeit, den Längsnuten 22 insgesamt sowohl mit ihren inneren als auch mit ihren äußeren Kanten einen gekrümmten Verlauf zu geben.

Die Schiebemutter 16 ist in der Stirnansicht nach Fig. 3 nicht rechteckig, sondern an zwei diagonal gegenüberliegenden Ecken abgerundet und so schmal (in Längsrichtung der Längsnuten 22 gemessen), daß sie in der mit Bezug auf Fig. 1 und 2 um 90° gedrehten Stellung durch die Öffnung 12 der C-Schiene 10 hindurch in diese eingeführt und dann um 90° in die in Fig. 1 und 2 gezeigte Stellung gedreht werden kann.

## Patentansprüche

1. Schiebemutter oder -schraube zum Einsetzen in C-Schienen mit einwärts weisenden Randstegen, die in Längsnuten der Mutter bzw. des Schraubenkopfs eingreifen, welche mit Verformungen der Randstege auslösenden Vorsprüngen versehen sind, **dadurch gekennzeichnet,** daß wenigstens ein Vorsprung durch seitliche Krümmung der Seitenwand einer Längsnut (22) gebildet ist, so daß er einen Randsteg (14) seitlich bogenförmig deformiert.

2. Schiebemutter oder -schraube nach Anspruch 1, **dadurch gekennzeichnet,** daß sich die seitliche Krümmung über den größten Teil der Länge einer Längsnut (22) erstreckt.

3. Schiebemutter oder -schraube nach Anspruch 1 oder 2, **dadurch gekennzeichnet,** daß beide Seitenwände jeder Längsnut (22) mit seitlichen Krümmungen geformt sind.

4. Schiebemutter oder -schraube nach einem der Ansprüche 1 bis 3, **dadurch gekennzeichnet,** daß alle inneren und äußeren Kanten der Längsnuten (22) der seitlichen Krümmung folgen.

5. Schiebemutter oder -schraube nach einem der Ansprüche 1 bis 3, **dadurch gekennzeichnet,** daß nur die inneren Kanten der Längsnuten (22) der seitlichen Krümmung folgen, während sich die äußeren Kanten der Längsnuten (22) geradlinig parallel erstrecken.

## Claims

1. A sliding nut or screw for insertion in C-rails having inwardly facing rim flanges which engage in longitudinal grooves of the nut or the screw head, which are provided with projections causing deformation of the rim flanges, characterised in that at least one projection is formed by lateral curvature of the side wall of a longitudinal groove (22) so that it laterally and arcuately deforms one rim flange (14).

2. A sliding nut or screw according to Claim 1, characterised in that the lateral curvature extends over the majority of the length of one longitudinal groove (22).

3. A sliding nut or screw according to Claim 1 or 2, characterised in that both side walls of each longitudinal groove (22) are formed with lateral curvatures.

4. A sliding nut or screw according to any one of Claims 1 to 3, characterised in that all the inner and outer edges of the longitudinal grooves (22) follow the lateral curvature.

5. A sliding nut or screw according to any one of Claims 1 to 3, characterised in that only the inner edges of the longitudinal grooves (22) follow the lateral curvature, whereas the outer edges of the longitudinal grooves (22) extend in a straight line and parallel.

## Revendications

1. Ecrou ou boulon coulissant dans un rail en C qui comporte des nervures de rive, rabattues vers l'intérieur, qui viennent en prise dans des rainures longitudinales de l'écrou ou du boulon, munies de bossages provoquant la déformation des rebords du rail, caractérisé en ce qu'au moins un bossage est constitué par une courbure latérale de la paroi d'une rainure longitudinale (22) entraînant la déformation latérale, en forme d'arc, d'une nervure de rive (14).

2. Ecrou ou boulon selon la revendication 1, caractérisé en ce que la courbure latérale occupe la plus grande partie de la longueur d'une rainure (22).

3. Ecrou ou boulon selon la revendication 1 ou 2, caractérisé en ce que les deux parois latérales de chaque rainure longitudinale (22) ont une forme présentant des courbures latérales.

4. Ecrou ou boulon selon une des revendications 1 à 3, caractérisé en ce que les bords internes et externes des rainures longitudinales (22) présentent la même courbure latérale.

5. Ecrou ou bouton selon une des revendications 1 à 3, caractérisé en ce que seuls les bords internes des rainures longitudinales (22) présentent une courbure latérale, les bords externes des rainures (22) ayant un tracé rectiligne parallèle.
